# EUROPEAN PATENT APPLICATION

(11) **EP 4 564 580 A1**
(43) Date of publication of application: **04.06.2025**
(21) Application number: 24216447.3
(22) Date of filing: 29.11.2024
(51) Int. Cl.: H01M 50/503, H01M 50/507, H01M 50/55, H01M 50/211, H01M 50/569, H01M 50/588, H01M 50/593

(54) **CELL BRACKETS AND BATTERY MODULES**

(30) Priority: 01.12.2023 CN 202323288387 U; 12.03.2024 WO PCT/CN2024/081166
(71) Applicant: Eve Energy Co., Ltd., Huizhou, Guangdong 516006 (CN)
(72) Inventor: LAN, Han, Huizhou, Guangdong (CN)
(74) Representative: Murgitroyd & Company

(57) **Abstract**

A cell bracket (1) and a battery module are provided, and relate to the field of battery technology. The cell bracket (1) is provided with a first direction and a second direction, and the cell bracket (1) includes: a bracket body (11), a plurality of first busbar installing slots (111) and a plurality of second busbar installing slots (112) are disposed on the bracket body (11). Each first busbar installing slot (111) and each second busbar installing slot (112) are arranged in sequence along the first direction respectively. The first busbar installing slots (111) and the second busbar installing slots (112) are spaced apart along the second direction. Each of the first busbar installing slots (111) includes a first installing sub-slot (1111) and a second installing sub-slot (1112), and the first installing sub-slot (1111) and the second installing sub-slot (1112) at least partially overlap along the second direction.

## Description

### TECHNICAL FIELD

The present disclosure relates to the field of battery technology, and in particular, to cell brackets and battery modules.

### BACKGROUND

In recent years, soft-pack batteries have been widely used in the power and energy storage fields. For the soft-pack battery, its high energy density and small size have always been one of the main research and development directions. In related art, in order to improve the energy density of the battery module, multiple cells are electrically connected in sequence through busbars and are disposed on a cell bracket

### SUMMARY

At present, there are many intervals in the arrangement of busbars and cells of the cell bracket, resulting in low space utilization of the cell bracket.

In order to improve the shortcomings of the prior art, the main purpose of the present disclosure is to provide a cell bracket and a battery module, so as to improve the problem of low space utilization of the cell bracket.

In order to achieve the above object, in a first aspect, the present disclosure provides a cell bracket, the cell bracket is provided with a first direction and a second direction, and the cell bracket includes:
a bracket body, wherein a first slot group and a second slot group are disposed on the bracket body, the first slot group and the second slot group are spaced apart along the second direction, the first slot group includes a plurality of first busbar installing slots, the second slot group includes a plurality of second busbar installing slots, each of the first busbar installing slots and each of the second busbar installing slots are respectively arranged in sequence along the first direction, and the first busbar installing slots and the second busbar installing slots are spaced apart along the second direction; and
each of the first busbar installing slots includes a first installing sub-slot and a second installing sub-slot, and the first installing sub-slot and the second installing sub-slot at least partially overlap along the second direction;
and/or each of the second busbar installing slots includes a third installing sub-slot and a fourth installing sub-slot, and the third installing sub-slot and the fourth installing sub-slot at least partially overlap along the second direction.

In some embodiments of the present disclosure, each of a plurality of first installing sub-slots and each of a plurality of second installing sub-slots of the first busbar installing slots are alternately in communication along the first direction;
and/or, each of a plurality of third installing sub-slots and each of a plurality of fourth installing sub-slots of the second busbar installing slots are alternately in communication along the first direction.

In some embodiments of the present disclosure, each of the first installing sub-slots and each of the second installing sub-slots are in communication through an overlapping portion along the second direction;
and/or each of the third installing sub-slots and each of the fourth installing sub-slots are in communication through an overlapping portion along the second direction.

In some embodiments of the present disclosure, a first through slot for enabling a tab to pass through is disposed on a bottom of each of the first busbar installing slots, and the first through slot is disposed from the first installing sub-slot and overlaps the second installing sub-slot along the second direction;
and/or a second through slot for enabling a tab to pass through is disposed on a bottom of each of the second busbar installing slots, and the second through slot is disposed from the third installing sub-slot and overlaps the fourth installing sub-slot along the second direction.

In some embodiments of the present disclosure, the first through slot is communicated with the first installing sub-slot and the second installing sub-slot along the second direction;
and/or, the second through slot is communicated with the third installing sub-slot and the fourth installing sub-slot along the second direction.

In some embodiments of the present disclosure, along the first direction, a third through slot for enabling a tab to pass through is disposed in a second installing sub-slot in one of two adjacent first busbar installing slots, the third through slot extends along the second direction and is in communication with a first installing sub-slot in another one of the two adjacent first busbar installing slots, and the third through slot is located between two adjacent first through slots;
and/or, along the first direction, a fourth through slot for enabling a tab to pass through is disposed in a fourth installing sub-slot in one of two adjacent second busbar installing slots, the fourth through slot extends along the second direction and is in communication with a third installing sub-slot in another one of the two adjacent second busbar installing slots, and the fourth through slot is located between two adjacent second through slots.

In some embodiments of the present disclosure, a plurality of first isolating walls and a plurality of second isolating walls are disposed on a side of the bracket body away from the first busbar installing slots, each of the first isolating walls is located between adjacent first through slot and third through slot, and each of the second isolating walls is located between adjacent second through slot and fourth through slot.

In some embodiments of the present disclosure, the bracket body is further provided with a first output slot and a second output slot, the first output slot is disposed at one side of the first slot group along the first direction, the first output slot is in communication with one of the first busbar installing slots at the side of the first slot group, the second output slot is disposed at one side of the second slot group along the first direction, the second output slot is in communication with one of the second busbar installing slots at the side of the second slot group, and along the first direction, the first output slot and the second output slot are respectively disposed on two opposite sides of the bracket body; and along the second direction, each of the first busbar installing slots and each of the second busbar installing slots are arranged in a misaligned manner along the second direction.

In some embodiments of the present disclosure, each of a bottom of the first output slot and the second output slot is provided with a conductive through hole.

In some embodiments of the present disclosure, the bracket body is further provided with a wire harness slot, and the wire harness slot is located between the first slot group and the second slot group and extends along the first direction.

In some embodiments of the present disclosure, at least one temperature probe installing hole is disposed on a bottom of the wire harness slot.

In a second aspect, an embodiment of the present disclosure provides a battery module including the cell bracket as described in the first aspect.

In some embodiments of the present disclosure, the battery module further includes:
a plurality of first conductive members and a plurality of second conductive members, each of the first conductive members is disposed in each of the first busbar installing slots, each of the second conductive members is disposed in each of the second busbar installing slots, a first through slot and a third through slot are disposed on a bottom of each of the first busbar installing slots, the first through slot and the third through-slot are spaced apart along the first direction, a second through slot and a fourth through slot are disposed on a bottom of each of the second busbar installing slots, and the second through slot and the fourth through slot are spaced apart along the first direction; and
a plurality of cells, wherein the cells are arranged and installed on one side of the bracket body away from the first conductive members along the first direction, each of the cell comprises a first tab and a second tab, the first tab passes through the first through slot or the third through slot and is connected to one of the first conductive members, and the second tab passes through the second through slot or the fourth through-slot and is connected to one of the second conductive members.

In some embodiments of the present disclosure, the battery module further includes a collecting wire harness with a plurality of branch wires and a collecting connector, one end of the collecting wire harness is connected to the collecting connector, a wire harness slot is disposed on the bracket body, the wire harness slot is located between the first busbar installing slots and the second busbar installing slots and extends along the first direction, one end of the collecting wire harness away from the collecting connector extends into the wire harness slot, and each of the branch wires is respectively connected to one of the first conductive members and one of the second conductive members.

In some embodiments of the present disclosure, a separating member is disposed between two adjacent ones of the cells; and/or
among the plurality of cells arranged in sequence along the first direction, one side of each of the cells arranged at a first place and a last place away from other ones of the cells is provided with an insulating plate; and/or
a fiberglass strip is wound around an outside of the cells to bundle the cells together.

### Beneficial effects

In the embodiments of the present disclosure, by disposing a plurality of first installing sub-slots and a plurality of second installing sub-slots, and making each of the first installing sub-slots and each of the second installing sub-slots at least partially overlap in the second direction, so that as many installing sub-slots as possible can be disposed in the limited space of the bracket body, thereby improving the space utilization of the cell bracket and achieving battery module installation with higher density.

### BRIEF DESCRIPTION OF THE DRAWINGS

In order to illustrate the technical solutions of the embodiments of the present disclosure more clearly, the accompanying drawings of the embodiments will be briefly introduced below. It is apparent that the accompanying drawings in the following description only relate to some embodiments of the present disclosure and are not intended to limit the present disclosure.
FIG. 1 is a schematic diagram of a structure of a cell bracket according to some embodiments of the present disclosure (from a first viewing angle);
FIG. 2 is a schematic diagram of a structure of a cell bracket according to some embodiments of the present disclosure (from a second viewing angle);
FIG. 3 is a schematic diagram of a structure of a battery module according to some embodiments of the present disclosure;
FIG. 4 is a schematic diagram of an explosion structure of FIG. 3 (from a first viewing angle);
FIG. 5 is a schematic diagram of an explosion structure of FIG. 3 (from a second viewing angle).

Explanation of reference numerals:
1-Cell bracket; 11-bracket body; 111-First busbar installing slot; 1111-First installing sub-slot; 1112-Second installing sub-slot; 1113-First through slot; 1114-Third through slot; 112-Second busbar installing slot; 1121-Third installing sub-slot; 1122-Fourth installing sub-slot; 1123-Second through slot; 1124-Fourth through slot; 113-Wire harness slot; 1131-Temperature probe installing hole; 12-First isolating wall; 13-Second isolating wall; 14-First output slot; 15-Second output slot; 151-Conductive through hole; 2-First conductive member; 3-Second conductive member; 4-Cell; 41-First tab; 42-Second tab; 5-Collecting wire harness; 51-Temperature collecting probe; 6-Collecting connector; 7-Separating member; 8-Glassfiber strip; 9-Insulating plate.

### DETAILED DESCRIPTION

The technical solutions in the embodiments of the present disclosure will be clearly and completely described below with reference to the accompanying drawings in the embodiments of the present disclosure. It is apparent that the described embodiments are only some of the embodiments of the present disclosure and are not all the embodiments of the present disclosure. Based on the embodiments in this disclosure, all other embodiments obtained by those skilled in the art without making creative efforts fall within the scope of protection of the present disclosure.

In the present disclosure, the word "exemplary" refers to "serving as an example, illustration, or explanation". The following description is presented to enable any person skilled in the art to achieve and use the present disclosure. In the following description, details are set forth for the purpose of explanation.

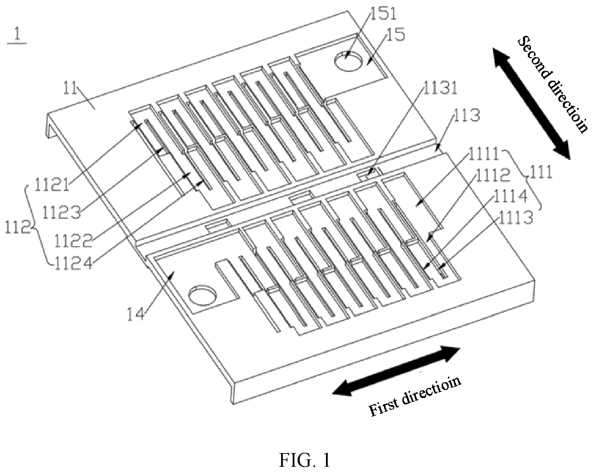

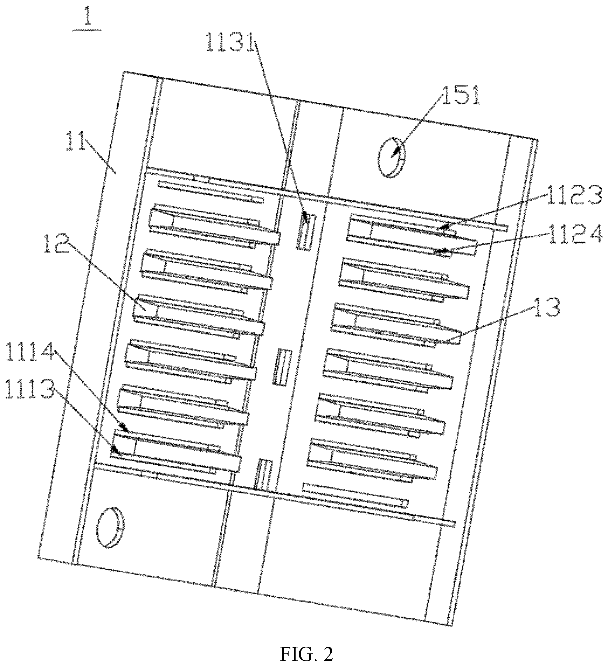

Referring to FIG. 1 and FIG. 2, the present disclosure provides a cell bracket 1, the cell bracket 1 is provided with a first direction and a second direction, and the cell bracket 1 includes:
a bracket body 11, a first slot group and a second slot group are disposed on the bracket body, and the first slot group and the second slot group are spaced apart along the second direction. The first slot group includes a plurality of first busbar installing slots 111, the second slot group includes a plurality of second busbar installing slots 112. Each of the plurality of first busbar installing slots 111 and each of the plurality of second busbar installing slots 112 are respectively arranged in sequence along the first direction, and the plurality of first busbar installing slots 111 and the plurality of second busbar installing slots 112 are spaced apart along the second direction.

Each of the first busbar installing slots 111 includes a first installing sub-slot 1111 and a second installing sub-slot 1112, and the first installing sub-slot 1111 and the second installing sub-slot 1112 at least partially overlap along the second direction; and/or, each of the second busbar installing slot 112 includes a third installing sub-slot 1121 and a fourth installing sub-slot 1122, and the third installing sub-slot 1121 and the fourth installing sub-slot 1122 at least partially overlap along the second direction.

It should be noted that the first installing sub-slot and the second installing sub-slot 1112 at least partially overlapping along the second direction includes two situations. The first situation is that the first installing sub-slot 1111 and the second installing sub-slot 1112 are disposed in a misaligned manner along the second direction. The second situation is that the first installing sub-slot 1111 and the second installing sub-slot 1112 are disposed in alignment along the second direction, that is, completely overlapped with each other. similarly, the third installing sub-slot 1121 and the fourth installing sub-slot 1122 at least partially overlapping along the second direction includes two situations. The first situation is that the third installing sub-slot 1121 and the fourth installing sub-slot 1122 are disposed in a misaligned manner along the second direction. The second situation is that the third installing sub-slot 1121 and the fourth installing sub-slot 1122 are disposed in alignment along the second direction, that is, completely overlapped with each other. In the embodiments, whether the first installing sub-slot 1111 and the second installing sub-slot 1112 or the third installing sub-slot 1121 and the fourth installing sub-slot 1122 are used, it is the first situation, that is, with a misaligned arrangement.

In the technical solutions provided by the present disclosure, a plurality of first busbar installing slots 111 and a plurality of second busbar installing slots 112 spaced apart from the first busbar installing slots are disposed on the bracket body 11, each first busbar installing slot 111 is provided with a first installing sub-slot 1111 and the second installing sub-slot 1112 that are disposed in a misaligned manner, and each second busbar installing slot 112 is provided with a third installing sub-slot 1121 and a fourth installing sub-slot 1122 that are disposed in a misaligned manner, so that as many installing sub-slots as possible can be disposed in the limited space of the bracket body 11, thereby improving the space utilization of the cell bracket 1 and achieving battery module installation with higher density . In detail, a plurality of first busbar installing slots 111 and a plurality of second busbar installing slots 112 are disposed on the bracket body 11, the plurality of first busbar installing slots 111 and the plurality of second busbar installing slots 112 are arranged in a misaligned manner along the second direction, so that the first busbar installing slots 111 and the second busbar installing slots 112 can be compressed as much as possible in the first direction, thereby increasing the number of busbar installing slots that can be disposed in the bracket body 11. Further, each first busbar installing slot 111 includes a first installing sub-slot 1111 and a second installing sub-slot 1112 that are arranged in a misaligned manner, and each second busbar installing slot 112 includes a third installing sub-slot 1121 and a fourth installing sub-slot 1122 arranged in a misaligned manner, so as to make the structures of the first busbar installing slot 111 and the second busbar installing slot 112 more compact, thereby further improving the space utilization of the cell bracket 1.

It should be noted that the first busbar installing slots 111 arranged in a misaligned manner along the second direction may be in one column or in multiple columns. Correspondingly, the second busbar installing slots 112 arranged in a misaligned manner along the second direction may be in one or more columns, which are not limited herein. In this embodiment, the first busbar installing slot 111 includes a first installing sub-slot 1111 and a second installing sub-slot 1112. In other embodiments, the first busbar installing slot 111 may further include more installing sub-slots, and which are all arranged in a misaligned manner along the second direction, which are not limited herein. Similarly, the second busbar installing slot 112 can only include the third installing sub-slot 1121 and the fourth installing sub-slot 1122, or can include more installing sub-slots, which are not limited herein.

Each of the first busbar installing slot 111 and the second busbar installing slot 112 is used to dispose a busbar, and the electrode polarity conducted in the busbar disposed in the first busbar installing slot 111 is opposite to the electrode polarity conducted in the busbar disposed in the second busbar installing slot 112. In other embodiments, each of the busbars disposed in the first busbar installing slots 111 and each of the busbars disposed in the second busbar installing slots 112 are alternately connected to a tab with positive polarity and to a tab with negative polarity of the cell, so as to connect multiple cells in series.

In some embodiments, each of the plurality of first installing sub-slots 1111 and each the plurality of second installing sub-slots 1112 are alternately in communication in sequence along the first direction; and/or, each of the plurality of third installing sub-slots 1121 and each of the plurality of fourth installing sub-slots 1122 are alternately in communication in sequence along the first direction. Each of the plurality of first installing sub-slots 1111 and each of the plurality of second installing sub-slots 1112 are alternately in communication in sequence along the first direction, that is to say, each of the first installing sub-slots 1111 and each of the second installing sub-slots 1112 are tightly adjacent to each other in the first direction, and there is no gap between the first installing sub-slot 1111 and the second installing sub-slot 1112 adjacent in the first direction, thereby improving the space utilization of the bracket body 11. Similarly, each of the plurality of third installing sub-slots 1121 and each of the plurality of fourth installing sub-slots 1122 are alternately in communication in sequence along the first direction, so as to improve the space utilization of the bracket body 11. It should be noted that each of the plurality of first installing sub-slots 1111 and each of the plurality of second installing sub-slots 1112 being alternately in communication in sequence along the first direction means that, along the first direction, the second installing sub-slot 1122 of the previous first busbar installing slot 111 is in communication with the first installing sub-slot 1111 of the subsequent first busbar installing slot 111. Similarly, each of the plurality of third installing sub-slots 1121 and each of the plurality of fourth installing sub-slots 1122 are alternately in communication along the first direction, which means that the third installing sub-slot 1121 of the previous second busbar installing slot 112 is in communication with the fourth installing sub-slot 1122 of the subsequent second busbar slot 112.

In some embodiments, each of the plurality of first installing sub-slots 1111 and each of the plurality of second installing sub-slots 1112 are in communication through an overlapping portion along the second direction, so that one busbar can be installed in two installing sub-slots in communication with each other, thereby reducing the installing times of the busbar; and/or, each of the plurality of third installing sub-slots 1121 and each of the plurality of fourth installing sub-slots 1122 are in communication through an overlapping portion along the second direction, so that one busbar can be installed in two installing sub-slots in communication with each other, thereby reducing the installing times of the busbar.

In some embodiments, a first through slot 1113 for enabling the tab to pass through is disposed on the bottom of the first busbar installing slot 111. The first through slot 1113 is disposed from the first installing sub-slot 1111 and is overlapped with the second installing sub-slot 1112 along the second direction, and the first through slot 1113 communicates the first installing sub-slot 1111 with the second installing sub-slot 1112 along the second direction. The first through slot 1113 is mainly configured to enable the cell tab of the cell 4 to pass through, so that the cell tab can be electrically connected to the busbar located in the first busbar installing slot 111. The first through slot 1113 is disposed in the first busbar installing slot 111, which is conducive to saving the limited space of the bracket body 11, so that the first through slot 1113 will not occupy additional area of the bracket body 11, and the through slot can further be disposed on the basis of the first busbar installing slot 111. In addition, since the first through slot 1113 communicates the first installing sub-slot 1111 with the second installing sub-slot 1112, when disposing the first through slot 1113, there is no need to perform twice positioning of the first through slot 1113, and the through slot can be directly disposed at one time in the position where the first installing sub-slot 1111 and the second installing sub-slot 1112 are in communication. And/or, a second through slot 1123 for enabling the tab to pass through is disposed on the bottom of the second busbar installing slot 112. The second through slot 1123 is disposed from the third installing sub-slot 1121 and is overlapped with the fourth installing sub-slot 1122 along the second direction, and the second through slot 1123 communicates the third installing sub-slot 1121 with the fourth installing sub-slot 1122 along the second direction. The second through slot 1123 is mainly configured to enable the cell tab of the cell 4 to pass through, so that the cell tab can be electrically connected to the busbar located in the second busbar installing slot 112. The second through slot 1123 is disposed in the second busbar installing slot 112, which is conducive to saving the limited space of the bracket body 11, so that the second through slot 1123 will not occupy additional area of the bracket body 11, and the through slot can further be disposed on the basis of the second busbar installing slot 112. In addition, since the second through slot 1123 communicates the third installing sub-slot 1121 with the fourth installing sub-slot 1122, when disposing the second through slot 1123, there is no need to perform twice positioning of the second through slot 1123, and the through slot can be directly disposed at one time in the position where the third installing sub-slot 1121 and the fourth installing sub-slot 1122 are in communication.

It should be noted that the area of the busbar is larger than the contact area between the cell tab and the busbar, which is conducive to increasing the heat dissipation area and helps the cell tab to dissipate heat. As for the first installing sub-slot 1111 and the second installing sub-slot 1112 communicated through the first through slot 1113, whether the first installing sub-slot 1111 and the second installing sub-slot 1112 in communication belong to the same first busbar installing slot 111 or not is not distinguished, that is, the first through slot 1113 can communicate the first installing sub-slot 1111 with the second installing sub-slot 1112 in the same first busbar installing slot 111, and can also communicate the second installing sub-slot 1112 in one first busbar installing slot 111 with the first installing sub-slot 1111 in another first busbar installing slot 111 adjacent thereto. The second through slot 1123 is the same as the first through slot 1113, and which are not described herein again.

In some embodiments, along the first direction, in two adjacent first busbar installing slots 111, the second installing sub-slot 1112 in one of the two adjacent first busbar installing slots 111 is provided with a third through slot 1114 for enabling the tab to pass through. The third though slot 1114 extends along the second direction and is in communication with the first installing sub-slot 1111 in another one of the two adjacent first busbar installing slots 111, and the third through slot 1114 is located between two adjacent first through slots 1113. In other words, the third through slot 1114 is disposed in one first busbar installing slot 111, and the third through slot 1114 extends along the second direction into another first busbar installing slot 111 adjacent to this first busbar installing slot 111, and the third through slot 1114 is located between two adjacent first through slots 1113, so as to enable the tabs to pass through the first through slot 1113 and the third through slot 1114, rather than only with the first through slot 1113 for enabling the tab to pass through. In addition, the third through slots 1114 do not additionally occupy other positions of the bracket body 11, but are arranged in regular order along the first direction in each of the first busbar installing slots 111. Compared with the case where only the first through slot 1113 is provided, the number of tabs can be increased without changing the area of the bracket body 11. And/or, along the first direction, in two adjacent second busbar installing slots 112, a fourth through slot 1124 for enabling the tab to pass through is provided in the fourth installing sub-slot 1122 in one of the two adjacent second busbar installing slots 112. The fourth though slot 1124 extends along the second direction and is in communication with the third installing sub-slot 1121 in another one of the two adjacent second busbar installing slots 112, and the fourth through slot 1124 is located between two adjacent second through slots 1123. Similarly, the beneficial effects of disposing the fourth through slot 1124 are the same as the beneficial effects of disposing the third through slot 1114, which are not be described again herein.

Further, a plurality of first isolating walls 12 and a plurality of second isolating walls 13 are disposed on the side of the bracket body 11 away from the first busbar installing slots 111. Each first isolating wall 12 is located between adjacent first through slot 1113 and third through slot 1114, and each second isolating wall 13 is located between adjacent second through slot 1123 and fourth through slot 1124. The first through slot 1113, the second through slot 1123, the third through slot 1114 and the fourth through slot 1124 are all configured to enable the cell tab to pass through, so that the cell tab can be electrically connected to the busbar. The main body portions of the plurality of cells 4 connected to the cell tabs are respectively located directly below the first through slot 1113, the second through slot 1123, the third through slot 1114 and the fourth through slot 1124. By disposing the first isolating wall 12 and the second isolating wall 13, two adjacent cells 4 can be effectively isolated. The first isolating wall 12 and the second isolating wall 13 herein are mainly configured to isolate the portions of cell tabs of the cells 4. Since the cell tabs are easy to generate heat, by isolating adjacent cell tabs through the isolating walls, heat concentration can be reduced to a certain extent.

In some embodiments, the bracket body 11 is further provided with a first output slot 14 and a second output slot 15. The plurality of first busbar installing slots 111 constitute a first slot group, and the plurality of second busbar installing slots 112 constitute a second slot group. The first output slot 14 is disposed at one side of the first slot group along the first direction, and the first output slot 14 is in communication with the first slot group. The "in communication" herein refers to that the first output slot 14 is in communication with the first busbar installing slot 111 at one side of the first slot group. The second output slot 15 is disposed at the other side of the second slot group along the first direction. The "other side" herein is relative to the first output slot 14. The second output slot 15 is in communication with the second slot group. The "in communication" herein means that the second output slot 15 is in communication with the second busbar installing slot 112 at one side of the second slot group. The first output slot 14 and the second output slot 15 are mainly configured to dispose the output aluminum bars, and the output aluminum bars disposed in the first output slot 14 and the second output slot 15 are electrically opposite, so as to form the output positive electrode and the output negative electrode to enable the battery module to be connected to external devices. The first output slot 14 is in communication with the first slot group, so that the first output slot 14 can be tightly adjacent to the first slot group, thereby improving the space utilization of the bracket body 11. Similarly, the second output slot 15 is in communication with the second slot group, so as to improve space utilization of the bracket body 11.

Along the first direction, the first output slot 14 and the second output slot 15 are respectively disposed on two opposite sides of the bracket body 11. Along the second direction, the plurality of first busbar installing slots 111 and the plurality of second busbar installing slots 112 are arranged in a misaligned manner along the second direction, so that the first busbar installing slots 111 and the second busbar installing slots 112 can be compressed as much as possible in the first direction, thereby increasing the number of busbar installing slots that can be disposed in the bracket body 11, and improving the space utilization of the bracket 1 of the cell 4.

It should be noted that the first output slot 14 and the second output slot 15 may be located at the same side or at two opposite sides along the first direction. In the embodiments, the first output slot 14 and the second output slot 15 are located at two opposite sides.

Further, a conductive through hole 151 is disposed on each of the bottom of the first output slot 14 and the second output slot 15. The conductive through hole 151 can be provided with a conductive pillar or can be connected to a conductive pillar in the external device, so as to facilitate the electrical connection between the battery module and external devices.

In some embodiments, the bracket body 11 is further provided with a wire harness slot 113. The wire harness slot 113 is located between the first slot group and the second slot group and extends along the first direction. The wire harness slot 113 is mainly configured to place the wire harness, so that the wire harness can be accommodated in the wire harness slot 113. The wire harness can extend along the wire harness slot 113, so that the wire harness can be distributed in each of the busbar installing slots, so as to achieve electrical connection of each busbar installing slot and completing information collection. The wire harness slot 113 is disposed between the first busbar installing slots 111 and the second busbar installing slots 112, on the one hand, the wire harness slot utilizes the area of a spacing that has to be reserved between the first busbar installing slots 111 and the second busbar installing slots 112, and on the other hand, the wire harness slot 113 can be extended through each busbar installing slot to facilitate the wiring of the wire harness.

Further, at least one temperature probe installing hole 1131 is disposed on the bottom of the wire harness slot 113, so that the probe for monitoring the temperature can be extended to the side of the cell 4 through the temperature probe installing hole 1131. There is no need to install the probe on other positions of the bracket body 11, and the wiring of the probe can also be directly connected from the wire harness slot 113, which are convenient for the wiring.

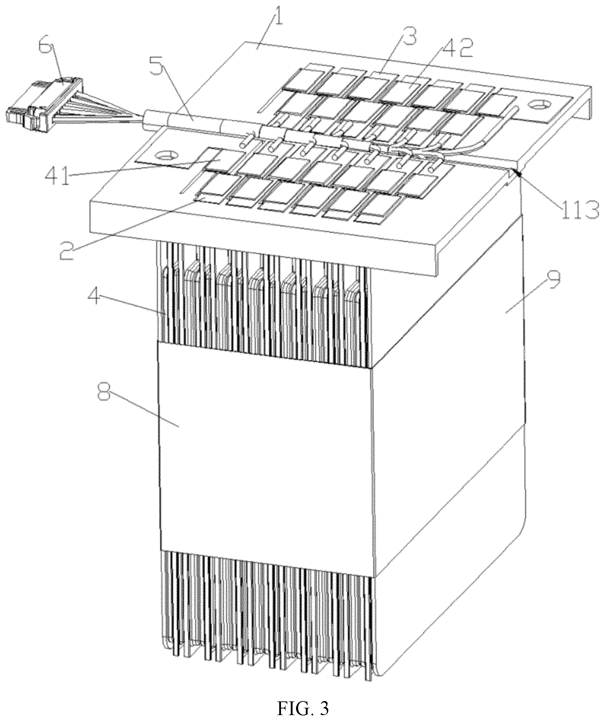

Referring to FIG. 1 to FIG. 5, an embodiment of the present disclosure further provides a battery module including the cell bracket 1 in any one of the embodiments described above.

In some embodiments, the battery module further includes:
a plurality of first conductive members 2, a plurality of second conductive members 3 and a plurality of cells 4. Each of the first conductive members 2 is disposed in each of the first busbar installing slots 111, and each of the second conductive members 3 is disposed in each of the second busbar installing slots 112. The first through slot 1113 is disposed on the bottom of the first busbar installing slot 111, and the second through slot 1123 is disposed on the bottom of the second busbar installing slot 112.

The plurality of cells 4 are arranged and installed on the side of the bracket body 11 away from the first conductive members 2 along the first direction. The cell 4 includes a first tab 41 and a second tab 42. The first tab 41 passes through the first through slot 1113 and is connected to the first conductive member 2, and the second tab 42 passes through the second through slot 1123 and is connected to the second conductive member 3.

The plurality of cells 4 in the battery module are mainly installed through the cell bracket 1 in the embodiments described above, wherein a plurality of first busbar installing slots 111 disposed in a misaligned manner and a plurality of second busbar installing slots 112 disposed in a misaligned manner are disposed on the bracket body 11, each first busbar installing slot 111 is provided with the first installing sub-slot 1111 and the second installing sub-slot 1112 that are disposed in a misaligned manner, and each second busbar installing slot 112 is provided with the third installing sub-slot 1121 and the fourth installing sub-slot 1122 that are disposed in a misaligned manner, so that as many installing sub-slots as possible can be disposed in the limited space of the bracket body 11, thereby improving the space utilization of the cell bracket 1 and achieving battery module installation with higher density. In detail, the plurality of first busbar installing slots 111 and the plurality of second busbar installing slots 112 are disposed on the bracket body 11. The plurality of first busbar installing slots 111 and the plurality of second busbar installing slots 112 are arranged in a misaligned manner along the second direction, so that the first busbar installing slots 111 and the second busbar installing slots 112 can be compressed as much as possible in the first direction, thereby increasing the number of busbar installing slots that can be disposed in the bracket body 11. Further, each first busbar installing slot 111 includes a first installing sub-slot 1111 and a second installing sub-slot 1112 arranged in a misaligned manner, and each second busbar installing slot 112 includes a third installing sub-slot 1121 and a fourth installing sub-slot 1122 arranged in a misaligned manner, so as to make the structures of the first busbar installing slot 111 and the second busbar installing slot 112 more compact, which can further improve the space utilization of the cell bracket 1. While improving the space utilization of the cell bracket 1, the number of cells 4 that can be integrated is also increased, thereby improving the energy density of the battery module.

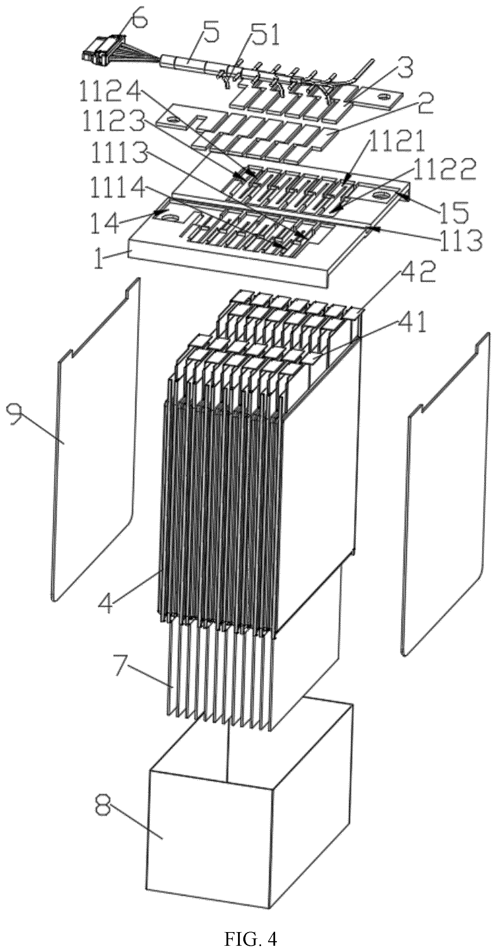

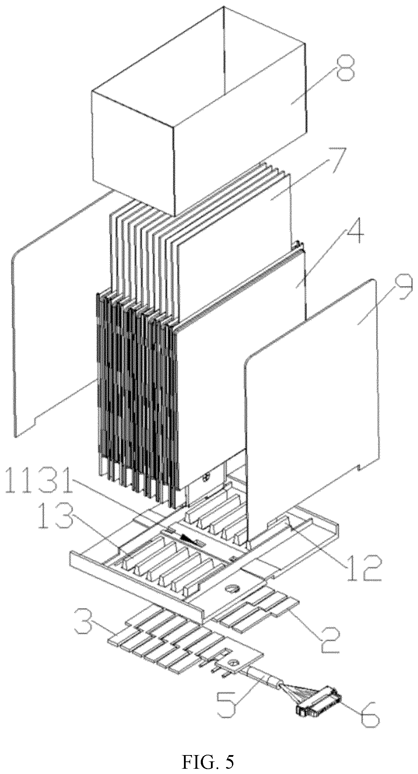

It should be noted that in some embodiments, referring to FIG. 4 and FIG. 5, each of the first conductive member 2 and the second conductive member 3 is an aluminum bar. A plurality of first conductive members 2 constitute aluminum bars connected in series, and a plurality of second conductive members 3 constitute aluminum bars connected in series. In the embodiments of parallel connection, the electrode polarity conducted by the first conductive member 2 and the second conductive member 3 are opposite. It is defined that the first conductive member 2 conducts positive electricity and the second conductive member 3 conducts negative electricity. The cell 4 has a positive electrode and a negative electrode, and the electricity of the positive electrode and the negative electrode is output through the first tab 41 and the second tab 42. In some embodiments, the first tab 41 is a positive tab, and the second tab 42 is a negative tab. The first tab 41 is connected to the first conductive member 2, so that the electricity of the cell 4 can be output to the first conductive member 2. The second tab 42 is connected to the second conductive member 3, so that the electricity of the cell 4 can be output to the second conductive member 3, and the first conductive member 2 and the second conductive member 3 have the same shape and are in different directions. One first conductive member 2 is disposed in a first installing sub-slot 1111 and a second installing sub-slot 1112 adjacent along the second direction, and one second conductive member 3 is disposed in a third installing sub-slot 1121 and a fourth mounting sub-slot 1122 adjacent along the second direction. Such arrangement can increase the areas of the first conductive member 2 and the second conductive member 3 and reduce the installing times of the conductive members, thereby improving the assembly efficiency of the conductive members and increasing the heat dissipation area, which is beneficial to the heat dissipation of the tabs.

In addition, the connection between the first tab 41 and the first conductive member 2 is through welding, and the connection between the second tab 42 and the second conductive member 3 is also through welding. Compared with bolt connection, it can avoid the risk of tabs being crushed, and the connection standards are more easily unified.

In some embodiments, the battery module further includes a positive output aluminum bar and a negative output aluminum bar. The positive output aluminum bar is disposed in the first output slot 14, and the negative output aluminum bar is disposed in the second output slot 15. Each of the positive output aluminum bar and the negative output aluminum bar is provided with an output through hole, and the output through hole is connected with the conductive through hole 151 to facilitate the arrangement or connection of the conductive pillar.

In some embodiments, the battery module further includes a collecting wire harness 5 having multiple branch wires and a collecting connector 6. One end of the collecting wire harness 5 is connected to the collecting connector 6. The collecting connector 6 is configured to integrate the current, voltage and temperature conditions of a plurality of cells 4 collected by the collecting wire harness 5 and is connected to the external detecting device, so as to realize the information collection of the cells 4. The wire harness slot 113 is disposed on the bracket body 11, and the wire harness slot 113 is located between the first busbar installing slots 111 and the second busbar installing slots 112 and extends along the first direction. One end of the collecting wire harness 5 away from the collecting connector 6 extends into the wire harness slot 113, and each of the plurality of branch wires are respectively connected to the first conductive members 2 and the second conductive members 3, so as to realize the collection of current and voltage information of each cell 4.

Further, at least one temperature collecting probe 51 is branched from the collecting wire harness 5, at least one temperature probe installing hole 1131 is disposed on the bottom of the wire harness slot 113, and each temperature collecting probe 51 extends to the side of the cell 4 through the temperature probe installing hole 1131, so as to monitor the temperature of the cell 4.

In some embodiments, the plurality of cells 4 are arranged in sequence along the first direction, due to the structures of the tightly adjacent through slots of the cell bracket 1, the distance between two adjacent cells 4 is very small, and thus the structure is more compact. In order to prevent adjacent cells 4 from generating a large amount of heat and occurring heat concentration, a separating member 7 is disposed between adjacent cells 4. The separating member 7 has low thermal conductivity and insulating performance, and can isolate the temperature between adjacent cells 4. On the one hand, it can make the temperature collecting probe 51 more accurate in monitoring the temperature of the cells 4, and on the other hand, it can prevent the mutual influence of the cells 4, so as to reduce and delay the propagation speed of thermal runaway between the cells 4, thereby ensuring a safe response time and the safety of the battery module.

In some embodiments, among the plurality of cells 4 arranged in sequence along the first direction, one side of each of cell 4 arranged at the first place and the last place away from other cells 4 is provided with an insulating plate 9, so as to form the basic protection of the plurality of cells 4.

Further, the battery module includes a fiberglass strip 8. The plurality of cells 4 are arranged in sequence along the first direction, and the fiberglass strip 8 is wound around the outside of the cells 4 to bundle the cells 4 together, thereby achieving the fixation of the cells 4. Compared with the fixation method by the cooperation of steel strips and end plates and side plates in related technologies, by using the fiberglass strip 8, the costs are much lower, and the fixation is simpler.

The battery module in the embodiments can be used in power batteries for new energy vehicles, new energy operating machinery, and the like.

At the same time, specific terms are used in the present disclosure to describe the embodiments of the present disclosure. For example, "one embodiment", "an embodiment", and/or "some embodiments" refer to a certain feature, structure or characteristic related to at least one embodiment of the present disclosure. Therefore, it should be emphasized and noted that "one embodiment" or "an embodiment" or "an alternative embodiment" mentioned twice or more times at different places in the specification do not necessarily refer to the same embodiment. In addition, certain features, structures or characteristics in one or more embodiments of the present disclosure may be appropriately combined.

In some embodiments, numbers describing the quantities of components and properties are used herein, it should be understood that such numbers for the description of the embodiments are described by the modifiers "about", "approximately" or "substantially" in some examples. Unless otherwise stated, modifiers such as "about" "approximately" or "substantially" indicate that a variation of ±% of the number is allowed. Accordingly, in some embodiments, the numerical parameters used in the specification and claims are approximations, and which may vary depending on the desired features of the individual embodiment. In some embodiments, numerical parameters should be considered with the specified number of significant digits and adopts the general digit preservation methods. In some embodiments of the present disclosure, although the numerical domains and parameters used to confirm the breadth of their ranges are approximations, in specific embodiments, the setting of such numerical values is as accurate as possible within a feasible range.

## Claims

1. A cell bracket (1), **characterized in that** the cell bracket is provided with a first direction and a second direction, and the cell bracket comprises:
a bracket body (11), wherein a first slot group and a second slot group are disposed on the bracket body (11), the first slot group and the second slot group are spaced apart along the second direction, the first slot group comprises a plurality of first busbar installing slots (111), the second slot group comprises a plurality of second busbar installing slots (112), each of the first busbar installing slots (111) and each of the second busbar installing slots (112) are respectively arranged in sequence along the first direction, and the first busbar installing slots (111) and the second busbar installing slots (112) are spaced apart along the second direction;
wherein each of the first busbar installing slots (111) comprises a first installing sub-slot (1111) and a second installing sub-slot (1112), and the first installing sub-slot (1111) and the second installing sub-slot (1112) at least partially overlap along the second direction; and/or
each of the second busbar installing slots (112) comprises a third installing sub-slot (1121) and a fourth installing sub-slot (1122), and the third installing sub-slot (1121) and the fourth installing sub-slot (1122) at least partially overlap along the second direction.

2. The cell bracket (1) according to claim 1, **characterized in that** each of a plurality of first installing sub-slots (1111) and each of a plurality of second installing sub-slots (1112) of the first busbar installing slots (111) are alternately in communication along the first direction; and/or
each of a plurality of third installing sub-slots (1121) and each of a plurality of fourth installing sub-slots (1122) of the second busbar installing slots (112) are alternately in communication along the first direction.

3. The cell bracket according to claim 2, **characterized in that** each of the first installing sub-slots (1111) and each of the second installing sub-slots (1112) are in communication through an overlapping portion along the second direction; and/or
each of the third installing sub-slots (1121) and each of the fourth mounting sub-slots are in communication through an overlapping portion along the second direction.

4. The cell bracket (1) according to claim 1, **characterized in that** a first through slot (1113) for enabling a tab to pass through is disposed on a bottom of each of the first busbar installing slots (111), and the first through slot (1113) is disposed from the first installing sub-slot (1111) and overlaps the second installing sub-slot (1112) along the second direction; and/or
a second through slot (1123) for enabling a tab to pass through is disposed on a bottom of each of the second busbar installing slots (112), and the second through slot (1123) is disposed from the third installing sub-slot (1121) and overlaps the fourth installing sub-slot (1122) along the second direction.

5. The cell bracket (1) according to claim 4, **characterized in that** the first through slot (1113) is communicated with the first installing sub-slot (1111) and the second installing sub-slot (1112) along the second direction; and/or
the second through slot (1123) is communicated with the third installing sub-slot (1121) and the fourth installing sub-slot (1122) along the second direction.

6. The cell bracket (1) according to claim 4, **characterized in that** along the first direction, a third through slot (1114) for enabling a tab to pass through is disposed in a second installing sub-slot (1112) in one of two adjacent first busbar installing slots (111), the third through slot (1114) extends along the second direction and is in communication with a first installing sub-slot (1111) in another one of the two adjacent first busbar installing slots (111), and the third through slot (1114) is located between two adjacent first through slots (1113); and/or
wherein along the first direction, a fourth through slot (1124) for enabling a tab to pass through is disposed in a fourth installing sub-slot (1122) in one of two adjacent second busbar installing slots (112), the fourth through slot (1124) extends along the second direction and is in communication with a third installing sub-slot (1121) in another one of the two adjacent second busbar installing slots (112), and the fourth through slot (1124) is located between two adjacent second through slots (1123).

7. The cell bracket (1) according to claim 6, **characterized in that** a plurality of first isolating walls (12) and a plurality of second isolating walls (13) are disposed on a side of the bracket body (11) away from the first busbar installing slots (111), each of the first isolating walls (12) is located between adjacent first through slot (1113) and third through slot (1114), and each of the second isolating walls (13) is located between adjacent second through slot (1123) and fourth through slot (1124).

8. The cell bracket (1) according to claim 1, **characterized in that** the bracket body (11) is further provided with a first output slot (14) and a second output slot (15), the first output slot (14) is disposed at one side of the first slot group along the first direction, the first output slot (14) is in communication with one of the first busbar installing slots (111) at the side of the first slot group, the second output slot (15) is disposed at one side of the second slot group along the first direction, the second output slot (15) is in communication with one of the second busbar installing slots (112) at the side of the second slot group, and along the first direction, the first output slot (14) and the second output slot (15) are respectively disposed on two opposite sides of the bracket body (11); and along the second direction, each of the first busbar installing slots (111) and each of the second busbar installing slots (112) are arranged in a misaligned manner along the second direction.

9. The cell bracket (1) according to claim 8, **characterized in that** each of a bottom of the first output slot (14) and a bottom of the second output slot (15) is provided with a conductive through hole (151).

10. The cell bracket (1) according to any one of claims 1 to 9, **characterized in that** the bracket body (11) is further provided with a wire harness slot (113), and the wire harness slot (113) is located between the first slot group and the second slot group and extends along the first direction.

11. The cell bracket (1) according to claim 10, **characterized in that** at least one temperature probe installing hole (1131) is disposed on a bottom of the wire harness slot (113).

12. A battery module **characterized by** comprising the cell bracket (1) according to any one of claims 1 to 11.

13. The battery module according to claim 12, **characterized in that** the battery module further comprise:
a plurality of first conductive members (2) and a plurality of second conductive members (3), each of the first conductive members (2) is disposed in each of the first busbar installing slots (111), each of the second conductive members (3) is disposed in each of the second busbar installing slots (112), a first through slot (1113) and a third through slot (1114) are disposed on a bottom of each of the first busbar installing slots (111), the first through slot (1113) and the third through slot are spaced apart along the first direction, a second through slot (1123) and a fourth through slot (1124) are disposed on a bottom of each of the second busbar installing slots (112), and the second through slot (1123) and the fourth through slot (1124) are spaced apart along the first direction; and
a plurality of cells (4), wherein the cells (4) are arranged and installed on one side of the bracket body (11) away from the first conductive members (2) along the first direction, each of the cells (4) comprises a first tab (41) and a second tab (42), the first tab (41) passes through the first through slot (1113) or the third through slot (1114) and is connected to one of the first conductive members (2), and the second tab (42) passes through the second through slot (1123) or the fourth through-slot and is connected to one of the second conductive members (3).

14. The battery module according to claim 13, **characterized in that** the battery module further comprises a collecting wire harness (5) with a plurality of branch wires and a collecting connector (6), one end of the collecting wire harness (5) is connected to the collecting connector, a wire harness slot (113) is disposed on the bracket body (11), the wire harness slot (113) is located between the first busbar installing slots (111) and the second busbar installing slots (112) and extends along the first direction, one end of the collecting wire harness (5) away from the collecting connector (6) extends into the wire harness slot (113), and each of the branch wires is respectively connected to one of the first conductive members (2) or one of the second conductive members (3).

15. The battery module according to claim 13 or 14, **characterized in that** a separating member (7) is disposed between two adjacent ones of the cells (4); and/or
among the plurality of cells (4) arranged in sequence along the first direction, one side of each of the cells (4) arranged at a first place and a last place away from other ones of the cells (4) is provided with an insulating plate (9); and/or
a fiberglass strip (8) is wound around an outside of the cells (4) to bundle the cells (4) together.
